# EUROPEAN PATENT APPLICATION

(11) **EP 1 263 183 A1**
(43) Date of publication of application: **04.12.2002**
(21) Application number: 01440152.5
(22) Date of filing: 01.06.2001
(51) Int. Cl.: H04L 29/06

(54) **Processor system, method and computer program product for monitoring remote terminal**

(71) Applicant: ALCATEL, 75008 Paris (FR)
(72) Inventor: Chantrain, Dominique, 2650 Edegem (BE); Daenen Koen, 3150 Haacht (BE); Handekyn, Koen, 9000 Gent (BE); Trappeniers Lieven, 3000 Leuven (BE); Batsleer Claudine, 9860 Scheldewind (BE); Focant, Stéphane, 1040 Etterbeek (BE); Marly, Nick, 9000 Gent (BE)
(74) Representative: Urlichs, Stefan, Dipl.-Phys.

(57) **Abstract**

The possibilities of processor systems - pc - modem - gateway - for allowing users through sessions defined by session information comprising session codes to contact service systems via access systems, can be increased by monitoring predefined sessions taking place via a terminal, and by receiving from a further terminal an authorization code for authorizing said monitoring and a session code and a destination code defining a destination, and by sending to said destination said session information corresponding with said session code. Preferably, parameters can be controlled, and session information is stored. Then via said further terminal near said processor system or at a remote distance via access systems, a user or an operator can monitor what other users are doing right now and what has been done in the past, and can adjust parameters for controlling the processor system generally and individual user options specifically.

## Description

The invention relates to a processor system to be coupled to a network for allowing a user via a terminal to contact at least one service system via an access server system with said user thereby being involved in at least one session defined by session information comprising a session code.

Such a processor system is known from US 6,151,629, which discloses in its figure 1 prior art parts like an access server system (150, 160) coupled to a service system (170) for allowing a user to contact the service system via the user's processor system (120 and/or 140). US 6,151,629 discloses in its column 3 lines 17-23 the session information defining a session ("dial-up numbers", "user names", "passwords" and/or "host names", etc).

The user's processor system is either a terminal (like a pc, a local computer, a workstation etc.) or corresponds with an interface or coupler or intermediate unit (like a modem(pool), a residential gateway, a Local Area Network or LAN etc.) to be coupled between terminal and network, with said network comprising the access server system (like a Network Access Server or NAS coupled to a Service Selection Gateway or SSG etc.) and the service system (like an Internet Service Provider or ISP etc.).

The known processor system is disadvantageous, inter alia, due to offering user possibilities insufficiently.

The processor system according to the invention is characterised in that said processor system comprises a monitor for monitoring at least one session taking place via said terminal and comprises a receiver coupled to said monitor for receiving from a further terminal an authorization code for authorizing said monitoring and for receiving from said further terminal said session code and for receiving from said further terminal a destination code defining a destination and comprises a sender coupled to said monitor and to said receiver for sending to said destination at least a part of said session information.

By providing the processor system with said monitor for monitoring at least one session taking place via said terminal, the processor system can monitor sessions. By providing the processor system with said receiver coupled to said monitor for receiving from a further terminal an authorization code for authorizing said monitoring and for receiving from said further terminal said session code and for receiving from said further terminal a destination code defining a destination and with said sender coupled to said monitor and to said receiver for sending to said destination at least a part of said session information, the monitor is used via said further terminal, and either monitoring all the time and sending in response to receival of one or more of said codes, or monitoring just in response to receival of one or more of said codes. The further terminal may thereby coincide with the terminal, or not, and the processor system and/or the destination may coincide with at least one of both terminals or not, and vice versa.

The invention is based on the insight, inter alia, that an increase of user possibilities should be accompanied by an introduction of and/or an increase of user competences, user authorities and/or user privileges.

The invention solves the problem, inter alia, of providing a processor system which offers more user possibilities. The introduction of monitor, receiver and sender allows, inter alia, parental control, verification of bills and/or accounts and the checking of processor system characteristics etc.

US 6,151,629 is related to a remote computer requiring Internet access via his home LAN. Therefore, this US patent discloses the access server system, the service system, the prior art processor system and several terminals. US 6,151,629 does not disclose said monitor, receiver and sender.

A first embodiment of the processor system according to the invention is characterised in that said processor system comprises a controller coupled to said receiver for controlling parameters defining session characteristics.

By providing the processor system with said controller coupled to said receiver for controlling parameters defining session characteristics, via the further terminal it is possible to control (like for example to check and/or to adjust etc.) these parameters (like for example the available bandwidth per user and/or the kind of session allowed per user and/or the speed per (certain kind of) session and/or the costs of a (certain kind of) session etc.).

A second embodiment of the processor system according to the invention is characterised in that said processor system comprises a memory coupled to said monitor and to said sender for storing session information.

By providing the processor system with said memory coupled to said monitor and to said sender for storing session information, via the further terminal it is possible to monitor and/or control sessions which have been started and finished in the past.

A third embodiment of the processor system according to the invention is characterised in that said further terminal is coupled to said processor system via said access server system.

In this case the further terminal does not coincide with said terminal and said processor system and is considered to be a so-called remote (wired or wireless) terminal.

A fourth embodiment of the processor system according to the invention is characterised in that said further terminal is coupled to said access server system via said processor system.

In this case said further terminal may coincide with said terminal and/or said processor system and for example forms part of a (wired and/or wireless) residential (home) network.

A fifth embodiment of the processor system according to the invention is characterised in that said monitoring of at least one session via said terminal is done on-line during said session, with said further terminal being involved in a further session.

In this case via said further terminal the session via said terminal is monitored, whereby the further terminal is involved in a further session (via the service system), for example for authorization purposes etc.

A sixth embodiment of the processor system according to the invention is characterised in that said monitoring of at least one session via said terminal is done on-line during said session, with said further terminal not being involved in a further session (via the service system).

In this case via said further terminal the session via said terminal is monitored, whereby the further terminal is not in a further session, for example due to just communicating with the processor system and/or the access server system but not with the service system etc.

A seventh embodiment of the processor system according to the invention is characterised in that said monitoring of at least one session via said terminal is done afterwards after said session has been finished.

In this case via said further terminal the session via said terminal is monitored afterwards, in other words after said session has been started and finished. Thereby the further terminal can be either in a further session (via the service system) or not, for example due to just communicating with the processor system and/or the access server system but not with the service system etc.

The invention yet further relates to a method for in combination with a processor system to be coupled to a network allowing a user via a terminal to contact at least one service system via an access server system with said user thereby being involved in at least one session defined by session information comprising a session code.

The method according to the invention is characterised in that said method comprises the steps of monitoring at least one session taking place via said terminal and receiving from a further terminal an authorization code for authorizing said monitoring and receiving from said further terminal said session code and receiving from said further terminal a destination code defining a destination and sending to said destination at least a part of said session information.

The invention also relates to a computer program product for allowing a user via a terminal to contact at least one service system via an access server system with said user thereby being involved in at least one session defined by session information comprising a session code.

The computer program product is characterised in that said computer program product comprises a monitoring function for monitoring at least one session taking place via said terminal and a receiving function for receiving from a further terminal an authorization code for authorizing said monitoring and receiving from said further terminal said session code and receiving from said further terminal a destination code defining a destination and a sending function for sending to said destination at least a part of said session information.

US 6,151,629 discloses a triggered remote dial up for Internet access. US 5,761,662 discloses a personalized information retrieval using a user defined profile, US 4,833,618 discloses a system for automatically reading utility meters from a remote location, and US 5,958,007 discloses an automatic and secure system for remote access to electronic mail and the Internet, none of them thereby showing any monitoring of sessions. All references are considered to be incorporated in this patent application, as background information.

The invention will be further explained more detailledly at the hand of drawings, whereby
figure 1 discloses a processor system according to the invention coupled to terminals and to a service system via an access server system, and
figure 2 discloses a flow chart illustrating a method according to the invention and a computer program product according to the invention.

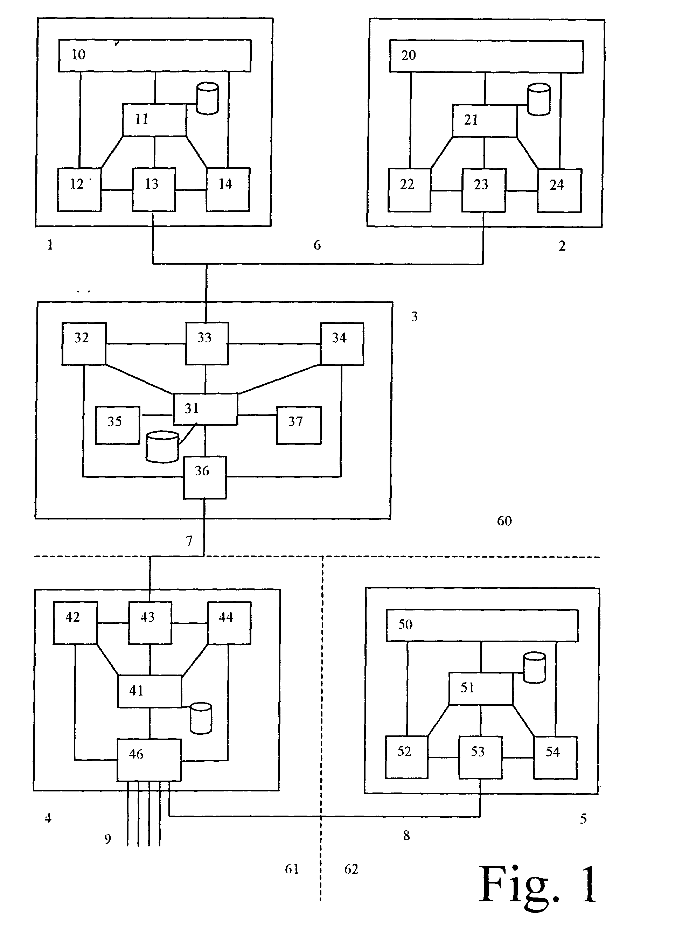

Figure 1 discloses a terminal 1, a terminal 2 and a Residential Gateway (RG) 3 which are mutually coupled via a bus 6. RG 3 is further coupled via a connection 7 to an access server system 4 consisting of a Network Access Server (NAS) and possibly a Service Selection Gateway (SSG) not shown but coupled to NAS 4 or integrated with NAS 4. NAS 4 is further coupled to a terminal 5 directly via a connection 8 or indirectly via several service systems not shown and coupled to connections 9.

Terminal 1 comprises a man machine interface (mmi) 10 of which an output is coupled to an input of a generator 12. An output of generator 12 is coupled to an input of interface 13, of which an output is coupled to an input of a detector 14. An output of detector 14 is coupled to an input of mmi 10. A processor + memory 11 is coupled via control connections to mmi 10, to generator 12, to interface 13 and to detector 14. An in/output of interface 13 is coupled to bus 6.

Terminal 2 comprises a man machine interface (mmi) 20 of which an output is coupled to an input of a generator 22. An output of generator 22 is coupled to an input of interface 23, of which an output is coupled to an input of a detector 24. An output of detector 24 is coupled to an input of mmi 20. A processor + memory 21 is coupled via control connections to mmi 20, to generator 22, to interface 23 and to detector 24. An in/output of interface 23 is coupled to bus 6.

RG 3 comprises a first interface 33 of which a first in/output is coupled to bus 6 and of which a second in/output is coupled to a first in/output of a sender 32 and of which a third in/output is coupled to an first in/output of a receiver 34. A second in/output of sender 32 is coupled to a first in/output of a second interface 36, of which a second in/output is coupled to a second in/output of receiver 34. A processor + memory 31 is coupled via control connections to both interfaces 33 and 36, to sender 32, to receiver 34, to a monitor 35 and to a controller 37. A third in/output of second interface 36 is coupled to connection 7.

NAS 4 comprises a first interface 43 of which a first in/output is coupled to connection 7 and of which a second in/output is coupled to a first in/output of a detector 42 and of which a third in/output is coupled to a first in/output of a generator 44. A second in/output of detector 42 is coupled to a first in/output of a second interface 46, of which a second in/output is coupled to a second in/output of generator 44. A processor + memory 41 is coupled via control connections to said interfaces 43 and 46, to detector 42 and to generator 44. A third in/output of second interface 46 is coupled to connections 8 and 9 (with connection 8 possibly forming part of connections 9).

Terminal 5 comprises a man machine interface (mmi) 50 of which an output is coupled to an input of a generator 52. An output of generator 52 is coupled to an input of interface 53, of which an output is coupled to an input of a detector 54. An output of detector 54 is coupled to an input of mmi 50. A processor + memory 51 is coupled via control connections to mmi 50, to generator 52, to interface 53 and to detector 54. An in/output of interface 53 is coupled to connection 8.

Generally terminals 1 and 2 and RG 3 are located in area 60, for example a home location, NAS 4 is located in area 61, for example a public or private network environment, and terminal 5 is located in area 62, for example another location at a remote distance from said home location. Sometimes, however, areas 61 and 62 may (partly) coincide.

The processor system according to the invention located among terminals and the access server system functions as follows.

According to a first embodiment, a user like for example a child is sitting behind terminal 1 and is involved in a session like surfing the web. Via mmi 10 (comprising a mouse, a keyboard, a display, a microphone, loudspeakers etc.), said child in the past has generated and/or selected a certain service system code defining a service system to be used (ISP or Internet Service Provider) and is now generating address codes (for example URLs or IP addresses) defining web sites. These codes have been supplied and are supplied via generator 12 and interface 13 under control of processor 11 and via bus 6 to RG 3. In RG 3 these codes have flown and flow via interface 33 to receiver 34, processor 31 has been informed and is informed, after which these codes have been supplied and are supplied via sender 32 and interface 37 under control of processor 31 and via connection 7 to NAS 4. In NAS 4 these codes have flown and flow via interface 43 to detector 42, processor 41 has been informed and is informed, after which these codes have been supplied and are supplied via generator 44 and interface 46 under control of processor 41 and via connections 9 to a said service system, etc.

Then another user like for example an adult using terminal 5 decides to check what his child is doing right now. Via mmi 50 (comprising a mouse, a keyboard, a display, a microphone, loudspeakers etc.), said adult generates a monitoring code (defining for example that he wants to monitor what is going on via RG 3) and an authorization code for authorizing said monitoring and a session code (defining for example the session - surfing the web - to be monitored and/or defining for example the user - said child - to be monitored etc.) and a destination code defining a destination (for example terminal 5) to which at least a part of session information is to be sent. These codes are supplied via generator 52 and interface 53 under control of processor 51 and via connection 8 to NAS 4. In NAS 4 these codes flow via interface 46 to detector 42, processor 41 is informed, after which these codes are supplied via generator 44 and interface 43 under control of processor 41 and via connection 7 to RG 3. In RG 3 these codes flow via interface 36 to receiver 34, processor 31 is informed, after which processor 31 checks the authorization code and in case of a positive authorization controls monitor 35 in such a way that monitor 35 starts monitoring the ongoing session (as for example defined by said session code), thereby for example storing session information in memory 31. At least a part of this session information (which part is for example defined by said monitoring code and/or said session code) is then sent back via NAS 4 to terminal 5 (in case said destination as defined by said destination code corresponds with terminal 5), where said adult is now online checking what his child is doing via RG 3.

According to a first alternative to said first embodiment, the authorization is checked firstly by processor 31, after which said adult at terminal 5 is informed and is requested to generate the next codes, together or again in different steps.

According to a second alternative to said first embodiment, the authorization is checked in NAS 4 or in terminal 5 or even in a service system (in which case he is involved in a further session), whereby said adult at terminal 5 has generated all codes together or is informed of a positive authorization and is requested to generate the next codes, together or again in different steps.

According to a third alternative to said first embodiment, terminal 1 and RG 3 are integrated, with at least interfaces 13 and 33 being combined. Further, possibly processors 11 and 31 could be combined, memories 11 and 31 could be combined, etc.

According to a fourth alternative to said first embodiment, said child is sitting behind terminal 1, and said adult is now sitting behind terminal 2, etc., with said monitoring now being a further session (going on via a service system), or not.

According to a fifth alternative to said first embodiment, terminal 2 and RG 3 are integrated, with at least interfaces 23 and 33 being combined. Further, possibly processors 21 and 31 could be combined, memories 21 and 31 could be combined, etc.

According to a second embodiment, a user like for example a child has in the past been sitting behind terminal 1 and has been involved in a session like surfing the web. Via mmi 10 (comprising a mouse, a keyboard, a display, a microphone, loudspeakers etc.), said child in the past has generated and/or selected a certain service system code defining a service system to be used (ISP or Internet Service Provider) and has generated address codes (for example URLs or IP addresses) defining web sites. These codes have been supplied via generator 12 and interface 13 under control of processor 11 and via bus 6 to RG 3. In RG 3 these codes have flown via interface 33 to receiver 34, processor 31 has been informed, after which these codes have been supplied via sender 32 and interface 37 under control of processor 31 and via connection 7 to NAS 4. In NAS 4 these codes have flown via interface 43 to detector 42, processor 41 has been informed, after which these codes have been supplied via generator 44 and interface 46 under control of processor 41 and via connections 9 to a said service system, etc. Thereby, in RG 3, monitor 35 has been monitoring each (predefined) session and storing session information for example in memory 31.

Later another user like for example an adult using terminal 5 decides to check what his child has been doing in the past. Via mmi 50 (comprising a mouse, a keyboard, a display, a microphone, loudspeakers etc.), said adult generates a monitoring code (defining for example that he wants to monitor what has been going on in the past via RG 3 and defining for example which time interval he is interested in) and an authorization code for authorizing said monitoring and a session code (defining for example the session - surfing the web - to be monitored and/or defining for example the user - said child - to be monitored etc.) and a destination code defining a destination (for example terminal 5) to which at least a part of session information is to be sent. These codes are supplied via generator 52 and interface 53 under control of processor 51 and via connection 8 to NAS 4. In NAS 4 these codes flow via interface 46 to detector 42, processor 41 is informed, after which these codes are supplied via generator 44 and interface 43 under control of processor 41 and via connection 7 to RG 3. In RG 3 these codes flow via interface 36 to receiver 34, processor 31 is informed, after which processor 31 checks the authorization code and in case of a positive authorization controls monitor 35 in such a way that at least a part of said session information (which part is for example defined by said monitoring code and/or said session code) of one or more predefined sessions (as for example defined by said session code) for example via memory 31 is then sent back via NAS 4 to terminal 5 (in case said destination as defined by said destination code corresponds with terminal 5), where said adult is now checking what his child has been doing via RG 3 in the past.

According to a first alternative to said second embodiment, the authorization is checked firstly by processor 31, after which said adult at terminal 5 is informed and is requested to generate the next codes, together or again in different steps.

According to a second alternative to said second embodiment, the authorization is checked in NAS 4 or in terminal 5 or even in a service system (in which case he is involved in a further session), whereby said adult at terminal 5 has generated all codes together or is informed of a positive authorization and is requested to generate the next codes, together or again in different steps.

According to a third alternative to said second embodiment, terminal 1 and RG 3 are integrated, with at least interfaces 13 and 33 being combined. Further, possibly processors 11 and 31 could be combined, memories 11 and 31 could be combined, etc.

According to a fourth alternative to said second embodiment, said child has been sitting in the past behind terminal 1 or 2, and said adult is now sitting behind terminal 1 or 2, etc., with said monitoring now being a further session (going on via a service system), or not.

According to a fifth alternative to said second embodiment, terminal 2 and RG 3 are integrated, with at least interfaces 23 and 33 being combined. Further, possibly processors 21 and 31 could be combined, memories 21 and 31 could be combined, etc.

According to a third embodiment, a user like for example an adult or an operator using terminal 5 decides to control RG 3. Via mmi 50 (comprising a mouse, a keyboard, a display, a microphone, loudspeakers etc.), said user generates a control code (defining for example that he wants to control RG 3) and possibly for example an authorization code for authorizing said controlling and possibly for example session codes (defining for example sessions to be controlled and/or defining for example the user who will get adjusted parameters and/or adjusted characteristics etc.) and possibly for example a destination code defining a destination (for example terminal 5) to which an overview of the present parameters and/or an adjustment confirmation is to be sent. These codes are supplied via generator 52 and interface 53 under control of processor 51 and via connection 8 to NAS 4. In NAS 4 these codes flow via interface 46 to detector 42, processor 41 is informed, after which these codes are supplied via generator 44 and interface 43 under control of processor 41 and via connection 7 to RG 3. In RG 3 these codes flow via interface 36 to receiver 34, processor 31 is informed, after which processor 31 checks the authorization code and in case of a positive authorization controls controller 37 in such a way that said parameters are checked and/or adjusted. Thereby for example the available bandwidth per user and/or the kind of session allowed per user and/or the speed per (certain kind of) session and/or the costs of a (certain kind of) session etc. can be checked and/or adjusted.

According to a first alternative to said third embodiment, the authorization is checked firstly by processor 31, after which said adult at terminal 5 is informed and is requested to generate the next codes, together or again in different steps.

According to a second alternative to said third embodiment, the authorization is checked in NAS 4 or in terminal 5 or even in a service system (in which case he is involved in a further session), whereby said adult at terminal 5 has generated all codes together or is informed of a positive authorization and is requested to generate the next codes, together or again in different steps.

Each embodiment and/or each alternative can be combined with each other embodiment and/or each other alternative. An in/output corresponds with an input, an output and/or an input + output. Each part of terminal 1,2,5 of RG 3, and of NAS 4, shown in the form of a block or not shown, can be 100% hardware, 100% software or a mixture of both. Therefore, a sender also comprises a sending function, a receiver also comprises a receiving function, a generator also comprises a generating function, a detector also comprises a detecting function, a monitor also comprises a monitoring function, and a controller also comprises a controlling function. Each block shown or not shown can be integrated with each other block shown and/or not shown per terminal, per RG, per NAS, but also per combinations of at least two of at least one terminal, RG, and/or NAS. In addition to each memory shown, per terminal, per RG, and per NAS, each block can have a further memory not shown for efficiency purposes.

The bus 6 between terminals 1 and 2 and RG 3, the connection 7 between RG 3 and NAS 4, and the connection between NAS 4 and terminal 5, are just examples, and can be replaced by one or more other wired (electrical or optical) connections, wireless (radio) connections etc, in a circuit-switched or packet-switched way, possibly in the form of an always-on connection. Connection 8 between terminal 5 and NAS 4 could further be guided via one or more service systems and/or switches and/or routers, etc. Connection 7 between RG 3 and NAS 4 could further be guided via one or more switches and/or routers, etc.

The processor system according to the invention could be an RG as shown in figure 1, but could also be a modem(pool), a LAN etc, and could be integrated with one of said terminals 1 and 2.

For said authorization, of course, pin codes, passwords, voice - picture - pupil fingerprint - recognition, smard cards, RF tags etc could be used.

Each one of said codes could be a single code, a code having a relation to other codes (due to for example together forming one signal) and/or form part of for example a HTML page or WAP page, etc.

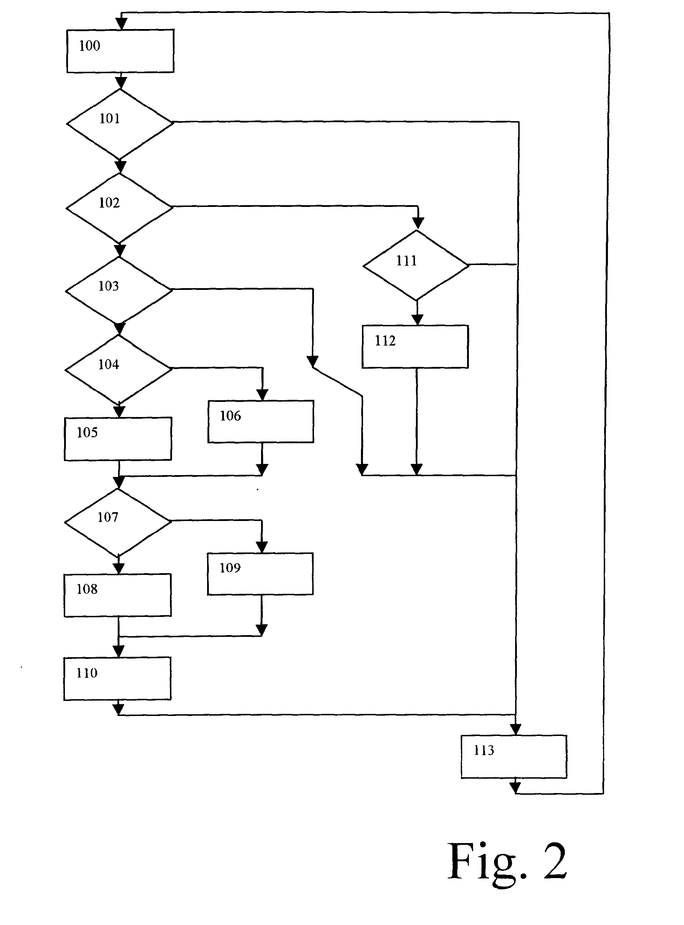

In the flow chart shown in figure 2 the blocks have the following meaning:
Block 100: Start, goto 101;
Block 101: Detection of code? If yes, goto 102, if no, goto 113;
Block 102: Detection of monitoring code? If yes, goto 103, if no, goto 111;
Block 103: Detection of authorization code? If ok, goto 104, if not, goto 113;
Block 104: Detection of destination code? If yes, goto 105, if no, goto 106;
Block 105: Send (future) results to destination, goto 107;
Block 106: Keep (future) results local, goto 107;
Block 107: Detection of session code? If yes, goto 108, if no, goto 109;
Block 108: Concentrate on this particular session, goto 110;
Block 109: Do not concentrate on particular session but keep it general, goto 110;
Block 110: Monitor, goto 113;
Block 111: Detection of control code? If yes, goto 112, if no, goto 113;
Block 112: Control/check/adjust, goto 113;
Block 113: Wait for a predetermined time-interval, goto 100.

The method according to the invention and the computer program product according to the invention function as follows. At a certain moment in time, the method is started (Block 100, goto 101); Is there a detection of a code? (Block 101) If yes, goto 102, if no, goto 113; Is there a detection of monitoring code? (Block 102) If yes, goto 103, if no, goto 111; Is there a detection of authorization code? (Block 103) If ok, goto 104, if not, goto 113; Is there a detection of destination code? (Block 104) If yes, goto 105, send (future) results to destination (Block 105), goto 107; If no, goto 106, keep (future) results local (Block 106), goto 107; Is there a detection of session code? (Block 107) If yes, goto 108, concentrate on this particular session, goto 110, if no, goto 109, do not concentrate on particular session but keep it general, goto 110; Monitor (Block 110), goto 113; If no detection of monitoring code, is there a detection of control code? (Block 111) If yes, goto 112, control/check/adjust, goto 113, if no, goto 113, wait for a predetermined time-interval, goto 100, etc.

Preferably, but not shown in figure 2, after detection of said control code, another authorization code and for example session codes and for example a destination code are to be detected, as described before, etc.

The method according to the invention and the computer program product according to the invention for implementing said method can be entirely located in the processor system according to the invention (RG 3, or a modem(pool), or a LAN, possibly integrated with a terminal), but can also be entirely located in the access server system according to the invention (NAS 4), and can further be located partly in said processor system according to the invention and partly in said access server system according to the invention.

The monitor may comprise a detector for detecting information, a comparator for comparing information with stored information and a memory for storing detected information and/or compared information and/or information to be compared with. The monitoring function may comprise a detecting function for detecting information, a comparing function for comparing information with stored information and a storage function for storing detected information and/or compared information and/or information to be compared with.

Any programming language can be used. A session represents a connection between a client and a server where information is exchanged between the two entities. Sessions can be a general mechanism which server side connections can use to both store and retrieve information on the client side of the connection. Sessions can be used for maintaining user-specific state and authenticated user identities among many interactions, so as to prevent unauthorised clients from accessing directly server resources for instance (a user has logged in on his computer = a personal session on a personal computer, a user has logged in, then runs several processes on a server machine = a session on a remote system, a user has acquired connectivity to a network = network session). Sessions may enable to reach these goals (maintain a context between each request of the user, provide facilities to access data, allow to list all the connections at a given time). Several types of sessions are possible (access session provides a context for relating activities between a user and a network, it is associated to a couple user/terminal, the terminal which is used to access the platform, a domain session provides a context relating activities between a user and a domain (network/VPN), a service session represents the use of a service in a domain). A session code may comprise a unique identifier of a session involving a random number, a time stamp, a checksum (integrity check and validation), and possibly an identification of the application or context of the session. A session may comprise a unique identifier (session code), session creation time, the most recent time the session was accessed, session state (active or not), idle time, session duration time, the user login name, the terminal used to log in, the location of the user, the domain reference, the protocol used to access the domain, the service reference, some billing information. Handling sessions on a system requires at least two objects: a "session object" and a "session manager". A session object could provide basic methods like create, activate/reactivate, set client ID in the session, set/get and remove properties in a session, a session manager could allow to add/remove sessions, get all valid sessions, optional functions could be set maximum session duration time, set maximum session idle time, provide a destroy privilege, manage persistence to recover from server shutdown.

## Claims

1. Processor system to be coupled to a network for allowing a user via a terminal to contact at least one service system via an access server system with said user thereby being involved in at least one session defined by session information comprising a session code, **characterised in that** said processor system comprises a monitor for monitoring at least one session taking place via said terminal and comprises a receiver coupled to said monitor for receiving from a further terminal an authorization code for authorizing said monitoring and for receiving from said further terminal said session code and for receiving from said further terminal a destination code defining a destination and comprises a sender coupled to said monitor and to said receiver for sending to said destination at least a part of said session information.

2. Processor system according to claim 1, **characterised in that** said processor system comprises a controller coupled to said receiver for controlling parameters defining session characteristics.

3. Processor system according to claim 1 or 2, **characterised in that** said processor system comprises a memory coupled to said monitor and to said sender for storing session information.

4. Processor system according to claim 1, 2 or 3, **characterised in that** said further terminal is coupled to said processor system via said access server system.

5. Processor system according to claim 1, 2 or 3, **characterised in that** said further terminal is coupled to said access server system via said processor system.

6. Processor system according to claim 1, 2, 3, 4 or 5, **characterised in that** said monitoring of at least one session via said terminal is done on-line during said session, with said further terminal being involved in a further session.

7. Processor system according to claim 1, 2, 3, 4 or 5, **characterised in that** said monitoring of at least one session via said terminal is done on-line during said session, with said further terminal not being involved in a further session.

8. Processor system according to claim 1, 2, 3, 4 or 5, **characterised in that** said monitoring of at least one session via said terminal is done afterwards after said session has been finished.

9. Method for in combination with a processor system to be coupled to a network allowing a user via a terminal to contact at least one service system via an access server system with said user thereby being involved in at least one session defined by session information comprising a session code, **characterised in that** said method comprises the steps of monitoring at least one session taking place via said terminal and receiving from a further terminal an authorization code for authorizing said monitoring and receiving from said further terminal said session code and receiving from said further terminal a destination code defining a destination and sending to said destination at least a part of said session information.

10. Computer program product for allowing a user via a terminal to contact at least one service system via an access server system with said user thereby being involved in at least one session defined by session information comprising a session code, **characterised in that** said computer program product comprises a monitoring function for monitoring at least one session taking place via said terminal and a receiving function for receiving from a further terminal an authorization code for authorizing said monitoring and receiving from said further terminal said session code and receiving from said further terminal a destination code defining a destination and a sending function for sending to said destination at least a part of said session information.
